# EUROPEAN PATENT APPLICATION

(11) **EP 1 258 797 A2**
(43) Date of publication of application: **20.11.2002**
(21) Application number: 02251658.7
(22) Date of filing: 08.03.2002
(51) Int. Cl.: G06F 1/24

(54) **Information processing apparatus and method of reset control**

(30) Priority: 15.05.2001 JP 2001145175
(71) Applicant: FUJITSU LIMITED, Kawasaki-shi, Kanagawa 211-8588 (JP)
(72) Inventor: Hikosaka, Takahiro Fujitsu Computer Technology Ltd, Kawasaki-shi, Kanagawa 211-8588 (JP); Kawasaki, Yusuke c/o Fujitsu Limited, Kawasaki-shi Kanagawa 211-8588 (JP)
(74) Representative: Fenlon, Christine Lesley

(57) **Abstract**

An information processing apparatus (100) includes a process part (101) for implementing a reset process by a program based on an interrupt signal ("0") and hard-resetting by a hard reset signal ("1"), an information holding part (102) for holding switching information that determines whether an external reset input (108) is supplied to the process part (101) as the interrupt signal ("0") or the hard reset signal ("1"), and a switch part (105) for switching a supply of the external reset input (108) to the process part (101) as either the interrupt signal ("0") or the hard reset signal ("1") based on the switching information.

## Description

### BACKGROUND OF THE INVENTION

### 1. Field of the Invention

The present invention generally relates to information processing apparatuses and methods of reset control, and more particularly, to an information processing apparatus and a method of reset control by which it is possible to implement resetting accurately in a simple structure.

### 2. Description of the Related Art

A related art operation apparatus securing a bus cycle when resetting a micro processor unit (MPU) is implemented is described in Japanese Laid-Open Patent Applications No. 5-127780, No. 6-231279, and No. 60-211545.

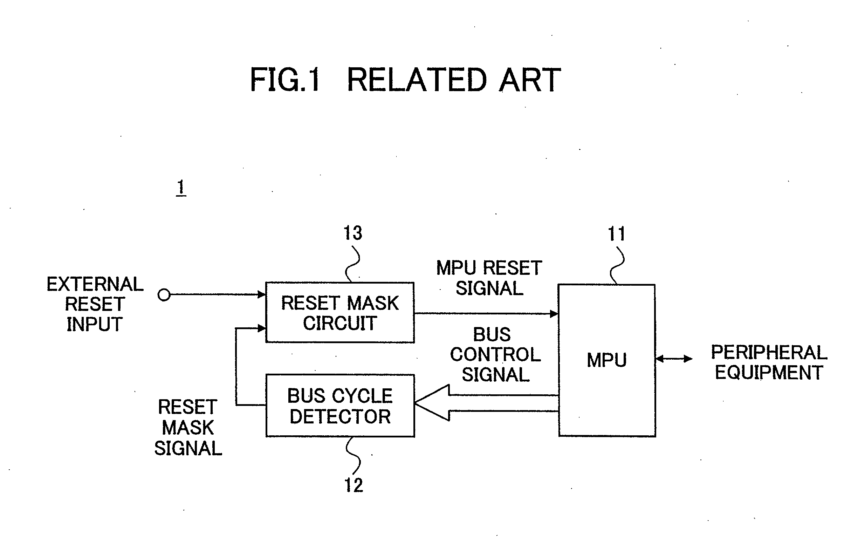

FIG. 1 is a block diagram of a related art information processing apparatus.

Referring to FIG. 1, the related art information processing apparatus includes an MPU 11, a bus cycle detector 12, and a reset mask circuit 13. Resetting the MPU 11 is implemented, after transmitting an input of external resetting to the MPU 11 is delayed until a bus cycle of the MPU 11 is completed.

As a result, when resetting occurs while the MPU 11 writes data to a memory or register, resetting is delayed until writing is completed appropriately. After writing is completed appropriately, resetting is implemented.

Although the data that is being written can be secured, the following problems are generated.

First, if resetting occurs when data such as personal information or security information are transferred as a block by a direct memory access (DMA) or the software without using the MPU 11, the data may be destroyed. As a result, a system may not work appropriately.

Furthermore, a plurality of buses controlled by the MPU such as a peripheral component interconnect (PCI) bus, an accelerated graphic port (AGP), or a cache, may work independently because the MPU has performed high level functions. Particularly, a circuit for recognizing a bus cycle of an internal random access memory (RAM), an internal read only memory (ROM), the cache, an external memory, or the like may be very complicated with regard to an MPU built in a large scale integration circuit (LSI).

In addition, since the bus cycle depends on the MPU for use, the circuit should be designed for each MPU.

### SUMMARY OF THE INVENTION

Accordingly, it is a general object of the present invention to provide a novel and useful information processing apparatus and method of reset control in which one or more of the problems described above are eliminated.

Another and more specific object of the present invention is to provide an information processing apparatus and a method of reset control so that a reset process can be implemented by a program based on an interrupt signal and a hard reset process can be implemented by a hard reset signal. As a result, it is possible to implement resetting accurately in a simple structure.

The above objects of the present invention are achieved by an information processing apparatus including a process part for implementing a reset process by a program based on an interrupt signal and hard-resetting by a hard reset signal, an information holding part for holding switching information that determines whether an external reset input is supplied to the process part as the interrupt signal or the hard reset signal, and a switch part for switching a supply of the external reset input to the process part as either the interrupt signal or the hard reset signal based on the switching information.

The switching information may be held at the information holding part by the process part after the process part is booted.

The above objects of the present invention are also achieved by a method of reset control for a process part of an information processing apparatus, including the steps of a) switching a supply of an external reset input to the process part as either an interrupt signal or a hard reset signal, based on switching information that is set beforehand, and b) implementing a reset process by a program based on the interrupt signal or hard-resetting by the hard reset signal.

The switching information in step a) may be set by the process part after the process part is booted.

According to the above description of the present invention, it is possible to select resetting based on reset interrupt or hard-resetting, by changing switching information. Hence, it is possible to switch to a reset method for each state.

The information processing apparatus may further include a back up part for implementing a back up process when system electric power is shut off, and wherein the information holding part may include a back up information holding part for holding information that indicates whether the back up part is in a back up state, and the switch part switches the supply of the external reset input to the process part as the hard reset signal, when the information that indicates whether the back up part is in the back up state is held at the back up information holding part.

Furthermore, in the method of reset control for the process part of the information processing apparatus, the external reset input in step a) may be supplied to the process part as the hard reset signal after system electric power is shut off and a back up process is implemented.

According to the above description of the present invention, it is possible to implement resetting the process part accurately even if the external reset input is active in case that the process part has started booting.

In the information processing apparatus, the process part may output self-reset information after a program being implemented is terminated when the interrupt signal is supplied to the process part, the information holding part may include a self-reset information holding part for holding self-reset information, and hard-resetting may be implemented for the process part when the self-reset information is active.

In the method of reset control for the process part of the information processing apparatus, a program being implemented may be terminated and hard-resetting may be implemented for the process part by the process part when the interrupt signal is supplied to the process part in step a).

According to the above description of the present invention, when the interrupt signal is supplied, it is possible to terminate the program being implemented and to implement hard-resetting by the process part. As a result, it is always possible to implement resetting the process part by hard-resetting. Thus, resetting by a program based on the interrupt signal and hard-resetting are not be mixed in the resetting process. Hence, it is possible to implement resetting the process part accurately.

Other objects, features, and advantages of the present invention will be more apparent from the following detailed description when read in conjunction with the accompanying drawings.

### BRIEF DESCRIPTION OF THE DRAWINGS

FIG. 1 is a block diagram of a related art operation apparatus;
FIG. 2 is a block diagram of a first embodiment of the present invention;
FIG. 3 is a flow chart of a reset switch processing program of the first embodiment according to the present invention;
FIG. 4 is a flow chart of an operation of an MPU when a reset operation is implemented according to the first embodiment of the present invention;
FIG. 5 is a timing chart when the reset operation is implemented according to the first embodiment of the present invention;
FIG. 6 is an additional timing chart when the reset operation is implemented according to the first embodiment of the present invention;
FIG. 7 is a block diagram of a second embodiment of the present invention;
FIG. 8 is a flow chart of an operation of an MPU of the second embodiment;
FIG. 9 is a block diagram of a third embodiment of the present invention; and
FIG. 10 is a flow chart of an operation of an MPU according to the third embodiment of the present invention.

### DETAILED DESCRIPTION OF THE PREFERED EMBODIMENTS

A description will now be given, with reference to the drawings, of embodiments of the present invention.

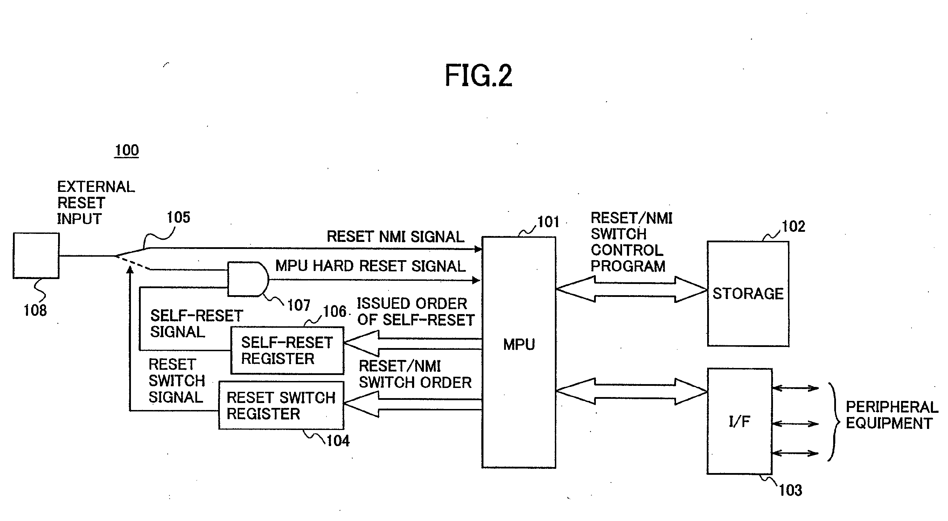

FIG. 2 is a block diagram of a first embodiment of the present invention.

Referring to FIG. 2, an information processing apparatus 100 of the first embodiment of the present invention includes an MPU 101, a storage 102, an interface circuit 103, a reset switch register 104, a switch circuit 105, a self-reset register 106, a logical product (AND) gate 107, and a reset switch circuit 108.

The MPU 101 implements a data process based on a program including a reset switch control program stored in the storage 102. The storage 102 includes a ROM, a RAM, and a hard disk drive (HDD) and stores a program and data. The interface circuit 103 implements exchanging data between the MPU 101 and a peripheral not shown in FIG. 2.

At the time of supplying electric power to the information processing apparatus 100, a flag is set at the reset switch register 104 by the MPU 101. The flag is used for distinguishing whether an external reset input is used as a hard reset input or a reset interrupt. For example, a flag "1" is set as a hard reset and a flag "0" is set as a reset interrupt.

The external reset input is supplied from the reset switch circuit 108 to the switch circuit 105. The flag held at the reset switch register 104 is supplied to the switch circuit 105. When the flag held at the reset switch register 104 is "0", the external reset input from the reset switch circuit 108 is supplied to the MPU 101 as a reset interrupt signal. For example, a non-maskable interrupt (NMI) signal is used as the reset interrupt signal. When the flag held at the reset switch register 104 is "1", the external reset input from the reset switch circuit 108 is supplied to the AND gate 107 as an input. The open end of the switch circuit 105 is "1".

A flag for deciding whether or not self-resetting is implemented based on an issued order of self-reset by the MPU 101 is set at the self-reset register 106. The flag held at the self-reset register 106 is supplied to the AND gate 107. The AND gate outputs an AND logic of the output of the switch circuit 105 and the flag held at the self-reset register 106. An output of the AND gate 107 is supplied to the MPU 101 as a hard reset signal.

The reset switch circuit 108 includes a switch operated by a user. The reset switch circuit 108 outputs a binary signal corresponding to an operation by the user. Generally the output of the reset switch circuit 108 is "1". During a reset operation by the user, the output of the reset switch circuit 108 is "0".

Next, a process with a reset switch processing program implemented by the MPU 101 at the time of supplying electric power will be described.

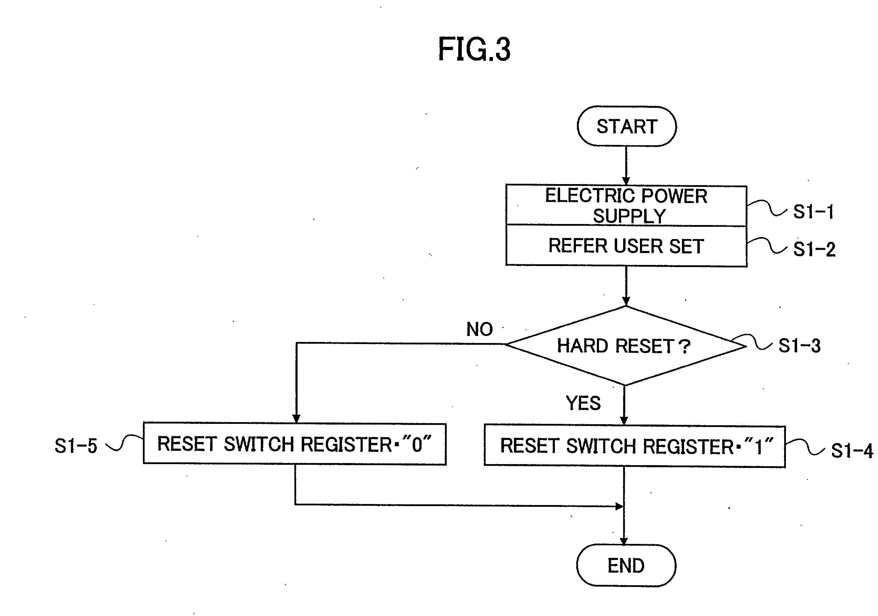

FIG. 3 is a flow chart of a reset switch processing program of a first embodiment according to the present invention.

When the electric power is supplied to the information processing apparatus 100 in step S1-1, the MPU 101 refers to a user set stored in the storage 102 in step S1-2. In step S1-3, the MPU 101 determines whether the user set is a hard reset or a reset interrupt.

If the MPU 101 determines the user set is the hard reset in step S1-3, the MPU 101 sets the flag "1" at the reset switch register 104 in step S1-4. If the MPU 101 determines the user set is the reset interrupt in step S1-3, the MPU 101 sets the flag "0" in step S1-5.

If the flag "0" is set at the reset switch register 104, the switch circuit 105 is switched so that an output of the reset switch circuit 108 is supplied to the MPU 101 as the reset interrupt, as shown by a solid line in FIG. 2. If the flag "1" is set at the reset switch register 104, the switch circuit 105 is switched so that the output of the reset switch circuit 108 is supplied to the AND gate 107, as shown by a doted line in FIG. 2.

Next, an operation of the MPU 101 when the reset switch circuit 108 is operated will be described.

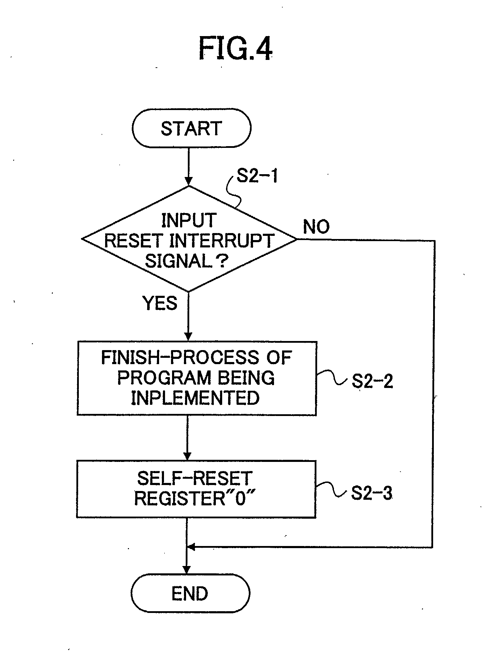

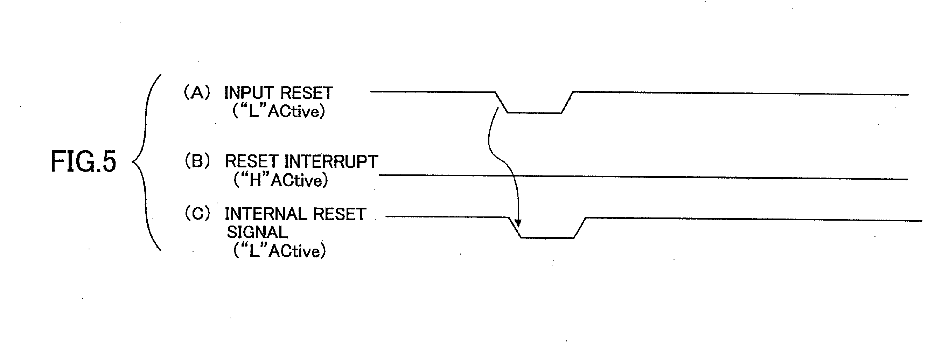

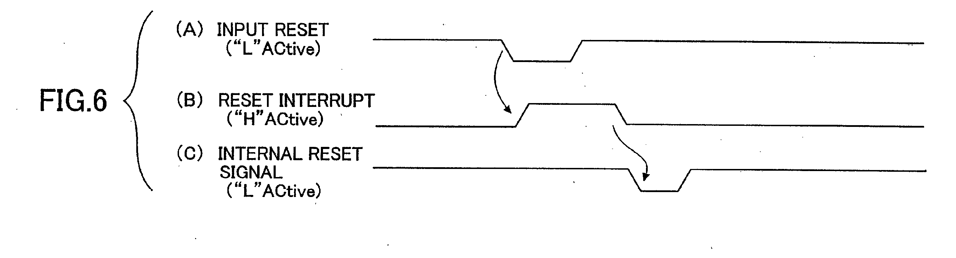

FIG. 4 is a flow chart of the operation of the MPU when a reset operation is implemented according to the first embodiment of the present invention. FIG. 5-(A) is a timing chart of an input reset when a reset operation is implemented according to the first embodiment of the present invention. FIG. 5-(B) is a timing chart of a reset interrupt when a reset operation is implemented according to the first embodiment of the present invention. FIG. 5-(C) is a timing chart of an internal reset signal when a reset operation is implemented according to the first embodiment of the present invention. FIG. 6-(A) is an additional timing chart of an input reset when a reset operation is implemented according to the first embodiment of the present invention. FIG. 6-(B) is an additional timing chart of a reset interrupt when a reset operation is implemented according to the first embodiment of the present invention. FIG. 6-(C) is an additional timing chart of a internal reset signal when a reset operation is implemented according to the first embodiment of the present invention.

When the flag "1" is set at the reset switch register 104, that is, the hard reset is selected, the switch circuit 105 is connected to the AND gate 107 as shown by the dotted line in FIG. 2. Hence, the external reset input is supplied from the reset switch circuit 108 to the AND gate 107 directly. As shown in FIG. 5-(A), when the flag of the external reset input is "0", namely active, the output of the AND gate 107 is "0" regardless of the flag of the self-reset register 106. Since a hard reset terminal of the MPU 101 is low-active, the internal reset signal of the MPU 101 is "0", namely active, as shown in FIG. 5-(C). As a result, resetting of the MPU 101 is implemented. That is, resetting of the internal register is implemented directly by the external reset.

In a case of that the flag "0" is set at the self-reset register 104, when the external reset input is "0", namely active, as shown in FIG. 6-(A), the external reset input is supplied to the MPU 101 as the reset interrupt signal. If the reset interrupt signal is "0", namely active, as shown in FIG. 6-(B), in step S2-1, a program being implemented is terminated in step S2-2.

After the program being implemented is terminated in step S2-2, the flag "0" is set at the self-reset register 106 in step S2-3 and the output of the AND gate 107 is "0". That is, a hard reset terminal of the MPU 101 is "0". Accordingly, the internal reset signal of the MPU 101 is "0", namely active, as shown in FIG. 6-(C) and thereby resetting of the MPU 101 is implemented.

Thus, the user can set the resetting operation of the MPU 101 by the external reset input, as a reset by a reset interrupt or a hard reset. That is, the self-resetting is issued by software.

In the above-mentioned embodiment, it is possible to select either the reset by the reset interrupt or the hard reset by the user. The hard-resetting may be implemented after an electric power back up is implemented, as mentioned by the following second embodiment.

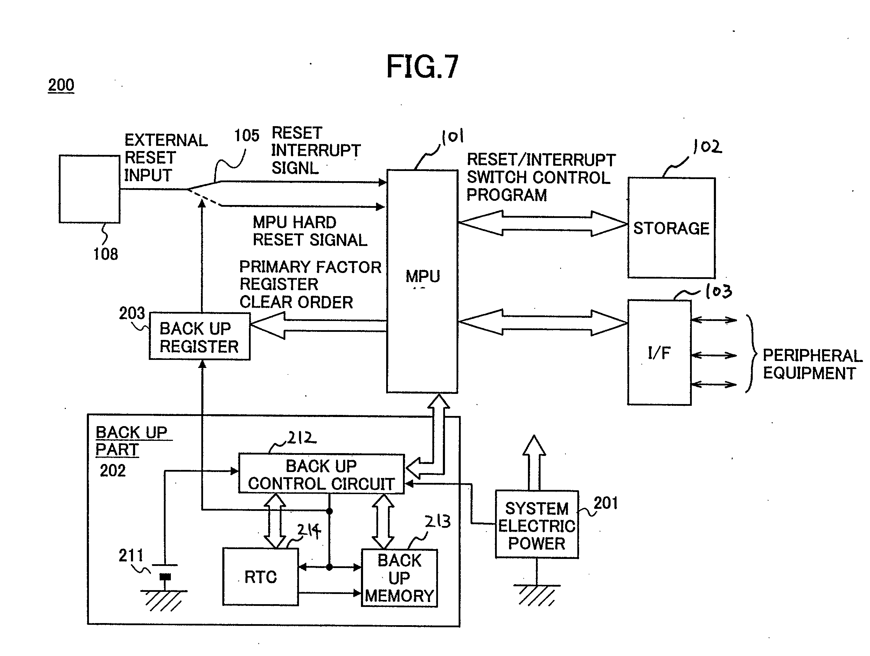

FIG. 7 is a block diagram of a second embodiment of the present invention. In FIG. 7, parts that are the same as the parts shown in FIG. 2 are given the same reference numerals, and explanation thereof will be omitted.

In this embodiment, the hard-resetting can be implemented whenever system electric power is shut off.

In this embodiment, an information processing apparatus 200 is normally operated by system electric power 201. When the system electric power 201 is shut off, only a minimum essential circuit is operated by a back up part 202. In addition, the information processing apparatus 200 includes a back up primary factor register 203 instead of the reset switch register 104 and the self-reset register 106 of the information processing apparatus 100. The switch control circuit 105 is controlled by the back up primary factor register 203.

"1" is set at the back up primary factor register 203 by the MPU 101. The "0" is set at the back up primary factor register 203 by a back up control signal from the back up part 202. An output of the back up primary factor register 203 is supplied to the switch circuit 105. When the back up primary factor register 203 outputs "0", an external reset input is supplied from the reset switch circuit 108 to the MPU 101 as a reset interrupt signal by the switch circuit 105 as shown by a solid line in FIG. 7. When the back up primary factor register 203 outputs "1", the external reset input is supplied from the reset switch circuit 108 to the MPU 101 as a hard reset signal by the switch circuit 105 as shown by a doted line in FIG. 7.

The back up part 202 includes a back up electric supply 211, a back up control circuit 212, a back up memory 213, and a real time clock (RTC) 214.

When the system electric supply 201 is shut off, electric power is supplied by the back up electric supply 211. The system electric supply 201 is monitored by the back up control circuit 212. When the system electric supply 201 is shut off, electric power and a back up control signal are supplied from the back up electric supply 211 to the back up memory 213 and the RTC 214. A structure information of hardware is held at the back up memory 213. A present time and date are counted and output by the RTC 214.

The back up primary factor register 203 is, for example, comprised of a flip-flop circuit. A flag "0" is written in the back up primary factor register 203 based on an order of the MPU 101. The back up control signal is supplied from the back up control circuit 212 to a set terminal of the back up primary factor register 203. When the back up control signal is "0", the back up control signal becomes active. That means the information processing apparatus 200 is in a back up state. When the back up control signal is "0", "1" is set at the back up primary factor register 203.

Next an operation of the information processing apparatus 200 of this embodiment will be described with reference to the drawings.

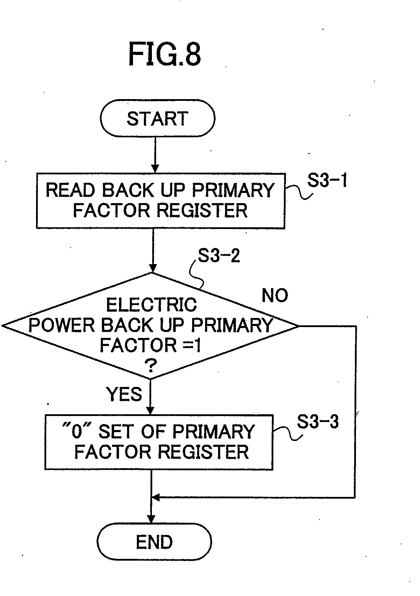

FIG. 8 is a flow chart of an operation of the MPU of the second embodiment.

In step S3-1, the MPU 101 reads the back up primary factor register 203. In step S3-2, the MPU 101 determines whether or not the back up primary factor is set inside of the MPU 101. When the back up primary factor is set inside of the MPU 101, the MPU 101 sets "0" at the back up primary factor register 203 in step S3-3 and an output of the back up primary factor register 203 is "0". Hence, the switch circuit 105 is connected to the MPU 101 as shown by a solid line in FIG. 7. As a result, an external reset input from the reset switch circuit 108 is supplied to the MPU 101 as a reset interrupt signal.

After the MPU 101 is booted completely, when an external reset input from the reset switch circuit 108 is "0", namely active, the reset interrupt signal is also "0", namely active. Therefore, the MPU 101 implements a resetting process based on a normal reset interrupt, which is a resetting process occurring after an implementing process is completed.

In a case wherein the MPU 101 is not yet booted completely and "0" is not set at the back up primary factor register 203, when the external reset input from the reset switch circuit 108 is "0", namely active, the external reset input is supplied to the MPU 101 as a hard reset signal. As a result, hard-resetting is implemented to the MPU 101.

As described above, an operation state of the MPU 101 is determined through an operation state of the back up part 202 in this embodiment. During a boot operation of the MPU 101, namely in a state wherein the MPU 101 is unsettled, the external reset input is supplied to the MPU 101 as a hard reset signal. After the MPU 101 is booted, that is, the MPU 101 is settled, the external reset input is supplied to the MPU 101 as a rest interrupt signal. Thus, it is possible to switch a reset method automatically and if necessary, it is possible to reset the MPU 101 accurately regardless of a state of the MPU 101.

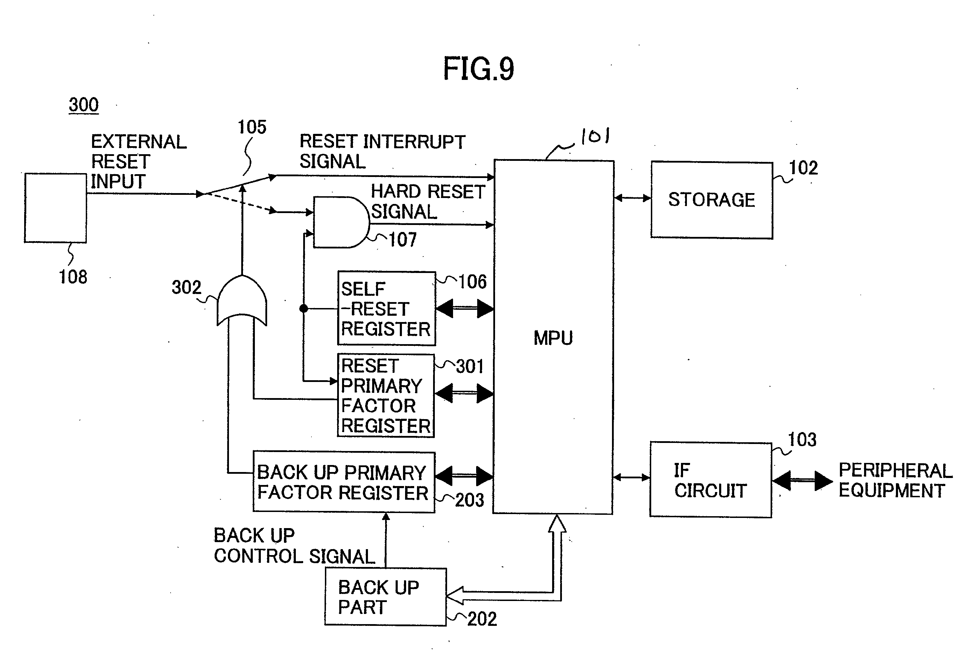

FIG. 9 is a block diagram of a third embodiment of the present invention. In FIG. 9, parts that are the same as the parts shown in FIG. 2 are given the same reference numerals, and explanation thereof will be omitted.

In this embodiment, an information processing apparatus 300 has a structure in which resetting is implemented accurately. It is controlled, whether the external reset input is supplied from the reset switch circuit 108 to the MPU 101 as a reset interrupt signal or a hard reset signal, by the self-reset register 106, the back up primary factor register 203, a reset primary factor register 301, the switch circuit 105, the AND gate 107, and an OR gate 302.

When the output of the self-reset register 106 is "0", namely active, the reset primary factor register 301 is "1" namely active. Based on an order from the MPU 101, the reset primary factor register 301 is "0", namely clear.

An output of the back up primary factor register 203 and an output of the reset primary factor register 301 are supplied to the OR gate 302. The OR gate 302 outputs an OR logic between the output of the back up primary factor register 203 and the output of the reset primary factor register 301. The output of the OR gate 302 is supplied to the switch circuit 105.

As shown by a solid line in FIG. 9, the switch circuit 105 supplies the external reset input from the reset switch circuit 108 to the MPU 101 as a reset interrupt signal when the output of the OR gate 302 is "0". The switch circuit 105 supplies the external reset input from the reset switch circuit 108 to the MPU 101 as a hard reset signal when the output of the OR gate 302 is "1".

Next, an operation of the information processing apparatus 300 in this embodiment will be described. First, an operation of the information processing apparatus 300 when the MPU 101 is booted will be described.

When the MPU 101 is booted, the self-reset register 106 is "1" and the reset primary factor register 301 is "0". As described in the second embodiment of the present invention, since the back up primary factor register 203 is "0", namely active, the external reset input is supplied from the switch circuit 105 to the AND gate 107 as shown by a doted line in FIG. 9. The AND gate 107 outputs an AND logic between an input from the switch circuit 105 and the self-reset register 106. Hence, when the external reset input to the MPU 101 is "0", namely active, the hard reset signal has the flag "0", namely becomes active. Accordingly, hard-resetting to the MPU 101 is implemented. After the MPU 101 is booted, the "1" is set at the back up primary factor register 203 by a program which the MPU implements.

Since both the back up primary factor register 203 and the reset primary factor register 301 are "0" after the MPU 101 is booted, the output of the OR gate 302 is "0". Hence, the external reset input from the reset switch circuit 108 is supplied to the MPU 101 as a reset interrupt signal.

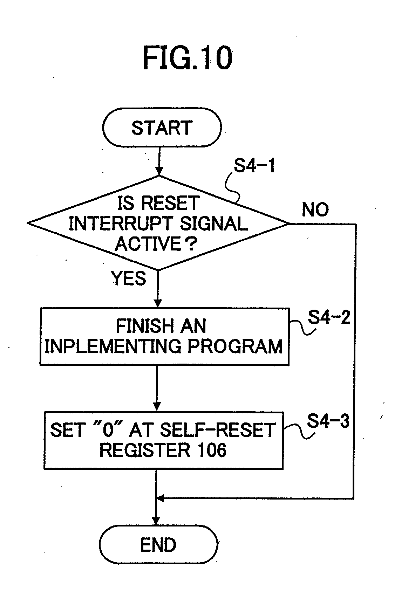

FIG. 10 is a flow chart of an operation of the MPU 101 according to the third embodiment of the present invention.

When the external reset input from the reset switch circuit 108 is "0", namely active, in step S4-1, the reset interrupt signal is "0". Hence resetting to the MPU 101 is implemented by reset interrupt. When resetting of the MPU 101 is implemented by the reset interrupt, the MPU 101 completes an implementing process in step S4-2.

After the MPU 101 ends the program, the MPU 101 sets "0" at the self-reset register 106 in step S4-3, so that "1" is set at the reset primary factor register 301 and an output of the OR gate 302 is "1". Hence, the switch circuit 105 is switched as shown by a doted line in FIG. 9. Therefore, in this case, when the external reset input from the reset switch circuit 108 is "0", namely active, the MPU 101 is implemented hard-resetting so that the MPU 101 is reset accurately.

When "0" is held at the self-reset register 106, a hard reset signal, which is an output of the AND gate 107, is "0", namely active, so that hard-resetting to the MPU 101 is implemented.

After the MPU 101 is booted, "0" is held at the reset primary factor register 301 by the MPU 101.

Since "0" is held at the reset primary factor register 301, the output of the OR gate 302 is "0". Because of this, the switch circuit 105 supplies the external reset input from the reset switch circuit 108 to the MPU 101 as a reset interrupt signal, as shown by a solid line in FIG. 9

As described above, when the MPU 101 is booted, the external reset input can be supplied from the reset switch circuit 108 to the MPU 101 as a hard reset signal. After the MPU 101 is booted, the external reset input can be supplied to the MPU 101 as a reset interrupt signal. Furthermore, after the MPU 101 is booted, when the external reset input becomes active, hard-resetting is implemented after the implementing program is terminated. In this case, the switch circuit 105 can be switched by the reset primary factor register 301, as the external reset input is supplied as a hard reset signal. Hence, even if the external reset input from the reset switch circuit 108 becomes active, it is possible to implement hard-resetting to the MPU 101. Therefore, the reset operation can be implemented accurately.

Since the reset operation can be implemented by one external reset input, no contradiction regarding a reset operation may occur inside of the MPU 101. Hence, the MPU 101 can implement a reset process accurately.

In the first through third embodiments, the MPU can implement a process by clearing contents of the respective registers. Therefore, the operation of the MPU 101 can be simplified.

The present invention is not limited to these embodiments, but variations and modifications may be made without departing from the scope of the present invention. For example, although the logic is set so that a signal for resetting is low active in the above mentioned embodiments, the signal may be low active or some of the signals may be low active or high active.

In addition, the reset switch circuit in the above mentioned embodiments may be comprised by a different chip from the MPU 101 or mounted on an LSI of one chip.

This patent application is based on Japanese priority patent application No. 2001-145175 filed on May 15, 2001, the entire contents of which are hereby incorporated by reference.

## Claims

1. An information processing apparatus, comprising:
a process part for implementing a reset process by a program based on an interrupt signal and hard-resetting by a hard reset signal;
an information holding part for holding switching information that determines whether an external reset input is supplied to the process part as the interrupt signal or the hard reset signal; and
a switch part for switching a supply of the external reset input to the process part as either the interrupt signal or the hard reset signal based on the switching information.

2. The information processing apparatus as claimed in claim 1, wherein the switching information is held at the information holding part by the process part after the process part is booted.

3. The information processing apparatus as claimed in claim 1, further comprising a back up part for implementing a back up process when system electric power is shut off, and
wherein the information holding part includes a back up information holding part for holding information that indicates whether the back up part is in a back up state, and
the switch part switches the supply of the external reset input to the process part as the hard reset signal, when the information that indicates whether the back up part is in the back up state is held at the back up information holding part.

4. The information processing apparatus as claimed in claim 1, wherein the process part outputs self-reset information after a program being implemented is terminated when the interrupt signal is supplied to the process part,
the information holding part includes a self-reset information holding part for holding the self-reset information, and
hard-resetting is implemented for the process part when the self-reset information is active.

5. The information processing apparatus as claimed in claim 4, wherein the information holding part includes a reset primary factor information holding part for holding reset primary factor information and making the reset primary factor information active when the self-reset information is active, and
the switch part is switched, as the external reset input can be supplied to the process part as the hard reset signal, when the information held at the reset primary factor information holding part is active.

6. An information processing apparatus, comprising a process part for implementing a reset process by a program based on an interrupt signal and hard-resetting by a hard reset signal,
wherein an external reset input is supplied to the process part as the interrupt signal during an operation of the process part, and
hard-resetting is implemented to the process part by the process part based on the hard reset signal after a program being implemented is terminated, when the interrupt signal is active.

7. A method of reset control for a process part of an information processing apparatus, comprising the steps of:
a) switching a supply of an external reset input to the process part as either an interrupt signal or a hard reset signal, based on switching information that is set beforehand; and
b) implementing a reset process by a program based on the interrupt signal or hard-resetting by the hard reset signal.

8. The method of reset control for the process part of the information processing apparatus as claimed in claim 7, wherein the switching information in step a) is set by the process part after the process part is booted.

9. The method of reset control for the process part of the information processing apparatus as claimed in claim 7, wherein the external reset input in step a) is supplied to the process part as the hard reset signal after system electric power is shut off and a back up process is implemented.

10. The method of reset control for the process part of the information processing apparatus as claimed in claim 7, wherein a program being implemented is terminated and hard-resetting is implemented for the process part by the process part when the interrupt signal is supplied to the process part in step a).

11. The method of reset control for the process part of the information processing apparatus as claimed in claim 7, wherein a program being implemented is terminated and self-reset information is output by the process part when the interrupt signal is supplied to the process part in step a), and
the external reset input is supplied to the process part as the hard reset signal when the self-reset information is active, whereby the hard-resetting is implemented.

12. A method of reset control for a process part of an information processing apparatus, wherein a reset process by a program based on an interrupt signal or hard-resetting by a hard reset signal is implemented, comprising the steps of:
a) supplying an external reset input to the process part as the interrupt signal during an operation of the process part; and
b) implementing hard-resetting to the process part by the process part based on the hard reset signal after a program being implemented is terminated when the interrupt signal is active.
